# EUROPÄISCHE PATENTSCHRIFT

(11) **EP 0 942 806 B1**
(45) Veröffentlichungstag und Bekanntmachung des Hinweises auf die Patenterteilung: **18.02.2004**
(21) Anmeldenummer: 97950095.6
(22) Anmeldetag: 05.11.1997
(51) Int. Cl.: B25B 13/44

(54) **Nuss zur Aufnahme eines Kopfes eines zu setzenden Befestigers**
Nut for accommodating the head of a fastening element to be inserted
Douille de clef pour loger la tête d'un élément de fixation à insérer

(30) Priorität: 06.12.1996 DE 19650799
(43) Veröffentlichungstag der Anmeldung: 22.09.1999
(73) Patentinhaber: SFS intec Holding AG, 9435 Heerbrugg (CH)
(72) Erfinder: SCHEIWILLER, Felix, CH-9450 Altstätten (CH)
(74) Vertreter: Ludescher, Hans
(86) Internationale Anmeldenummer: PCT/EP1997/006099
(87) Internationale Veröffentlichungsnummer: WO 1998/024595

(56) Entgegenhaltungen:
- EP-A- 0 325 728
- WO-A-95/22440
- BE-A- 495 625
- DE-A- 1 603 969
- DE-A- 3 924 323
- FR-A- 1 101 601
- US-A- 1 499 701
- US-A- 1 807 264
- US-A- 2 555 836
- US-A- 5 375 489

## Beschreibung

Die Erfindung betrifft eine Nuß zur Aufnahme eines Kopfes eines zu setzenden Befestigers und zur Haltung des Befestigers sowie zum Antrieb des Befestigers während eines Setzvorganges, wobei die Nuß mehrere in Umfangsrichtung aufeinander folgende Backen aufweist, welche verdrehfest in eine hülsenartige Halterung eingreifen können und gegenüber dieser Halterung in axialer Richtung zwischen zwei Endstellungen verschiebbar sind, wobei an der Innenseite der Halterung zur Mittelachse spitzwinklig verlaufende Auflaufflächen ausgebildet sein können und wobei an der Außenoberfläche der Backen zur Mittelachse spitzwinklig verlaufende Auflaufflächen ausgebildet sind, wobei die Backen durch axiales Eindrücken in die Halterung infolge der Auflaufflächen gegeneinander drückbar sind. Eine solche Nuß ist aus der US 1 807 264 A bekannt.

Gerade beim Setzen von selbstbohrenden Schrauben kommt es immer wieder zu relativ langen Bohrzeiten, welche sich daraus ergeben, daß nicht von vorneherein entsprechend großer Anpreßdruck ausgeübt werden kann, da die Gefahr des Auskippens der Schraube in der Nuß gegeben ist, weil einerseits die Schraubenköpfe fertigungsbedingt große Toleranzen haben und weil andererseits die Bohrspitze an dem Werkstück abgleitet. Speziell auf einer glatten Metalloberfläche mußeine Schraube unter Umständen mehrfach angesetzt werden, bis die Spitze des Bohrteiles angreift. Erst dann kann mit vollem Druck auf das Eindrehgerät eingewirkt werden, so daß erst von diesem Zeitpunkt an der notwendige Bohrdruck vorhanden ist.

Bei Verwendung von handelsüblichen Nüssen zum Setzen von Befestigern, insbesondere selbstbohrenden Befestigern, ergeben sich somit bei einer Einhandbedienung allein schon aus der Tatsache, daß die Spitze des Bohrteiles immer wieder abgleitet, weil ansonsten die Gefahr eines Auskippens des Befestigers gegeben ist, relativ lange Bohrzeiten. Wenn mit nur wenig Druck gearbeitet werden kann, ist die Gefahr des Abgleitens der Spitze wiederum wesentliche höher.

Bei einer Nuß gemäß der US-PS 42 13 355 ist eine Einhandbedienung nicht möglich, um einen Befestiger wie z.B. eine Schraube so einzuspannen, daß die Gefahr des Auskippens des Befestigers aus der Nuß bei einem Setzvorgang von Anfang an mit Sicherheit vermieden wird. Zum Einspannen einer Mutter, wofür die bekannte Nuß hauptsächlich bestimmt ist, muß mit der einen Hand ein Ratschenschlüssel gehalten werden, und mit der anderen Hand muß ein Einstellstück an der Nuß gedreht werden, bis die zuvor zwischen Backen eingeführte Mutter in den Backen fest eingespannt ist. Nachdem also zuvor die Mutter beidhändig fest eingespannt worden ist, ist anschließend ein Einhandbetrieb möglich. Das ist darauf zurückzuführen, daß diese bekannte Nuß wie ein Bohrfutter aufgebaut ist, bei dem auch eine Hülse gegenüber der Backenhalterung verdreht werden muß, um einen Einspannvorgang auszuführen. Das Einspannen einer Schraube müßte überdies sehr sorgfältig und mit großem Kraftaufwand erfolgen, wenn die Gefahr des Auskippens aus der Nuß bei einem Setzvorgang von Anfang an mit Sicherheit vermieden werden soll.

Aus der DE-PS 847 429 ist ein Arbeitskopf für kraftangetriebene Schraubgeräte zum Einschrauben von Stehbolzen oder Madenschrauben in Sacklöcher bekannt. Der Arbeitskopf besteht aus zwei in einer Antriebshülse axial verschiebbar, aber undrehbar aufgenommenen, sich mit den einander zugekehrten Flächen aus einer Öffnungsstellung der Klemmflächen für den Übergang in deren Schließlage aufeinander abwälzenden Klemmbacken, einem den beiden Klemmbacken zugeordneten Stirnwiderlager in Form einer ersten Kugel für einen aufzunehmenden Stehbolzen und einem zwischen die rückwärtigen Enden der Klemmbacken bei deren axialer Verschiebung durch den auf das Stimwiderlager auftreffenden Stehbolzen eintretenden und diese unter Schließung der Klemmenden spreizenden Endwiderlager an der Hülse in Form eine zweiten Kugel. Die Klemmenden sind mit Innengewinde versehen und sind in einer unteren Grundstellung geöffnet. Wenn ein Stehbolzen oder dergleichen in den Arbeitskopf eingeführt wird, drückt er die erste Kugel nach oben in Berührung mit den Klemmbacken, die somit nach oben verschoben werden und durch die zweite Kugel oben auseinandergespreizt werden. Die Klemmbacken schwenken dabei um die Berührungsstelle mit der ersten Kugel, so daß sich die Klemmenden unten um den Stehbolzen schließen. Der Gewindeeingriff zwischen Klemmbacken und Stehbolzen läßt eine gewisse Toleranz zu, ohne den Einspannvorgang zu gefährden. Wenn aber z.B. die Klemmenden innen glatte Flächen aufwiesen zum Einspannen eines Befestigerkopfes, so würde sich nur bei einer ganz bestimmten Kopfgröße eine flächige Einspannung erzielen lassen. Bei jeder fertigungsbedingten Abweichung des Befestigerkopfes ergäbe sich zwischen diesem und den Klemmenden wegen des zangenartigen Schließvorganges der Klemmbacken lediglich eine Linienberührung, die nicht ausreichend wäre, um einen solchen Befestiger so fest einspannen zu können, daß er bei einem Setzvorgang, bei dem gebohrt werden müßte, nicht auskippen könnte.

Bei der Ausführung gemäß der US-A-1 807 264 sind Backen zur Halterung des Gewindebereiches eines Gewindebolzens vorgesehen, welche im zusammengedrückten Zustand eine Art Innengewinde bilden. Eine Halterung dieses Gewindebolzens kann erst dann erfolgen, wenn ein mittiger, federbelasteter Bolzen entsprechend weit eingedrückt ist, damit der Gewindebolzen einen festen Anschlag findet. Erst bei entsprechend weitem Eindrücken schließen sich dann auch die Backen und erfassen das Gewinde. Beim Eindrehen eines solchen Gewindebolzens ist es aber durchaus denkbar, daß sich dieser noch geringfügig weiterdreht, bis er dann endgültig fest eingespannt ist.

Die Backen sind in ihrer ausgefahrenen Ruhestellung auseinandergeschwenkt.

Auch bei einer weiteren bekannten Ausgestaltung (US-A-2 555 836) wird durch eine Feder bewirkt, daß Backen in einer Öffnungsstellung verbleiben, indem sie ohne Wirkung entgegen dieser Feder auf eine aufzunehmende Schraubenmutter aufgesetzt werden können. Es ist hier nur ein sehr geringer axialer Bereich vorhanden, an welchem entsprechende Rippen vorgesehen sind, um die in der Form wohl kreisrunde Mutter erfassen zu können. Die Feder hält also die Backen in einer nach außen gepressten Öffnungsstellung.

Aufgabe der Erfindung ist es, eine Nuß der im Oberbegriff des Patentanspruches angegebenen Art zu schaffen, mit welcher ein Befestiger auf einfache und sichere Weise so erfasst werden kann, daß die Gefahr des Auskippens des Befestigers aus der Nuß bei einem Setzvorgang von Anfang an vermieden wird.

Diese Aufgabe wird erfindungsgemäß dadurch gelöst, daß die Backen in radialer Richtung federbelastet zusammengedrückt sind und in ihrer einen Endstellung zur Aufnahme eines Kopfes durch den Kopf auseinanderdrückbar sind und die in axialer Richtung aus der Halterung heraus federbelastbaren Backen bei axialer Krafteinwirkung auf die Backen in Richtung der anderen Endstellung durch gegenseitige Einwirkung zwischen Halterung und Backen in radialer Richtung entgegen der Kraft einer im Inneren der Halterung vorgesehenen Feder zwangsweise zusammendrückbar sind, und daß die Backen durch einen in eine im Bereich der spitzwinkligen Auflauffläche ausgebildete Nut am Außenumfang der Backen eingelegten O-Ring federnd gegeneinander gedrückt sind.

Bei der Nuß nach der Erfindung werden bei dem Einspannvorgang die Backen parallel zueinander bewegt. Unabhängig von möglichen Toleranzen der Abmessungen eines Befestigerkopfes wird dieser daher immer flächig auf der gesamten Kopflänge achsparallel eingespannt, und zwar um so fester, je stärker die axiale Kraftausübung ist. Wenn beim Ansetzen des Befestigers oder des Bohrteils des Befestigers auf einem Untergrund entsprechend voller Druck auf das Eindrehwerkzeug ausgeübt wird, bewegen sich die Backen durch diese axiale Krafteinwirkung in deren Halterung hinein und werden dort infolge besonderer formschlüssiger Ausbildungen in radialer Richtung zwangsweise gegeneinander gedrückt, so daß der Schraubenkopf ähnlich wie bei einem Schraubstock fest eingespannt wird. Solange also vom Eindrehwerkzeug entsprechend voller Druck auf den Befestiger ausgeübt wird, bleibt der Befestigerkopf fest eingespannt, so daß einerseits ein Auskippen des Befestigers in der Nuß ausgeschlossen und andererseits durch das feste Einspannen gewährleistet wird, daß die Spitze eines Bohrteiles bei einem Befestiger direkt an dem angesetzten Bereich eindringt, ohne daß die Spitze in irgendeiner Weise abgleitet. Somit wird das Loch immer dort gebohrt, wo es erwünscht ist.

Durch die ausgezeichnete Klemmung des Schraubenkopfes in der Nuß und die dadurch echt geführte Spitze des Bohrteiles am Befestiger kann von Anfang an der volle Druck eingesetzt werden.

Bei Versuchen hat sich sogar gezeigt, daß bei Bedarf auch ein spitzwinklig zur Werkstückoberfläche ausgerichtetes Bohren und Eindrehen einer Schraube möglich ist, ohne daß die Spitze des Bohrteiles abgleitet. Gerade durch den von Anfang an einsetzbaren vollen Druck dringt die Spitze des Bohrteiles unmittelbar an der angesetzten Stelle sofort in das Werkstück ein.

Bei der vorliegenden Erfindung werden die Backen federbelastet in der Ruhestellung gegeneinander gedrückt, so daß sie beim Eindrücken eines Schraubenkopfes geringfügig entgegen der Wirkung der Feder auseinanderschwenken können. Der Befestiger wird also bis zum Ansetzen an dem Eindrehort provisorisch festgehalten, wobei erst dann, wenn der Befestiger am Untergrund angepresst wird, wenn also ein entsprechender axialer Druck aufgebracht wird, der Kopf des Befestigers fest zwischen den Backen eingespannt wird.

Durch die an der Innenseite der Halterung und an der Außenoberfläche der Backen zur Mittelachse spitzwinklig verlaufenden Auflaufflächen wird erreicht, daßdie Backen durch axiales Eindrücken in die Halterung infolge der Auflaufflächen gegeneinander drückbar sind, und daß bereits bei einer nicht allzu großen axialen Krafteinwirkung eine entsprechend verstärkte radiale Kraftausübung auf den Befestigerkopf erfolgt, so daß der Befestigerkopf sofort nach dem Ansetzen der Spitze des Bohrteiles des Befestigers fest eingespannt wird. Somit wird durch die spitzwinklig verlaufende Auflauffläche eine entsprechende Kraftübersetzung erzielt, durch welche eine optimale Einspannung und auch eine entsprechende Achsausrichtung zwischen der Drehachse des Eindrehwerkzeuges und der Mittelachse des Befestigers erfolgt.

Durch korrespondierend zueinander ausgebildete Auflaufflächen an der Halterung und an den Backen ist eine relativ großflächige Anlage dieser Flächen aneinander möglich und damit auch eine optimale Kraftübertragung beim axialen Eindrücken der Backen in die Halterung.

Da die die Nuß bildenden Backen in axialer Richtung aus der Halterung heraus federbelastet sind, ist gewährleistet, daß sich die Backen nach Beendigung eines Eindrehvorganges immer wieder lösen und in ihre Ruhestellung zurückkehren.

Eine einfache Ausführungsvariante sieht dabei vor, daß die Backen durch einen in eine Nut am Außenumfang der Backen eingelegten O-Ring federnd gegeneinander gedrückt sind. Da ferner die Nut zur Aufnahme des O-Ringes im Bereich der spitzwinkligen Auflauffläche ausgebildet ist, ergibt sich daraus eine konstruktiv sehr einfache und wirkungsvolle Ausgestaltung. Der Bereich, welcher an sich bereits durch die spitzwinkligen Auflaufflächen konisch erweitert ist, wird entsprechend ausgenützt, da hier die relativ größte Materialdicke vorhanden ist, um eine solche Nut anzubringen. Außerdem ergibt sich dadurch zusätzlich der Vorteil, daß der eingelegte O-Ring gerade in jenem Bereich wirkt, wo er erwünscht ist, nämlich in jenem Bereich, in welchem der Befestigerkopf zwischen den Backen gehalten wird.

Ausführungsbeispiele der Erfindung werden in der nachstehenden Beschreibung anhand der Zeichnungen noch näher erläutert. Es zeigen:
Fig. 1 einen Längsschnitt durch einen in ein Eindrehwerkzeug einsetzbaren Schraubvorsatz in welchem am freien Ende eine Nuß eingesetzt ist;
Fig. 2 eine vergrößerte Darstellung einer Nuß in Schrägsicht mit einem in diese einsetzbaren Schraubenkopf;
Fig. 3 die gleiche Ausgestaltung wie Fig. 1, d.h. die fertig montierte Anordnung;
Fig. 4 und Fig. 5 die Montage- bzw. Demontagemöglichkeit der Backen der Nuß;
Fig. 6 bis 8 eine andere Ausführungsvariante eines Schraubvorsatzes mit einer eingesetzten Nuß, wobei die Darstellung nach Fig. 6 vergrößert ist, die Fig. 7 eine Darstellung in Originalgröße zeigt und Fig. 8 die Teile dieses Schraubvorsatzes in demontiertem Zustand.

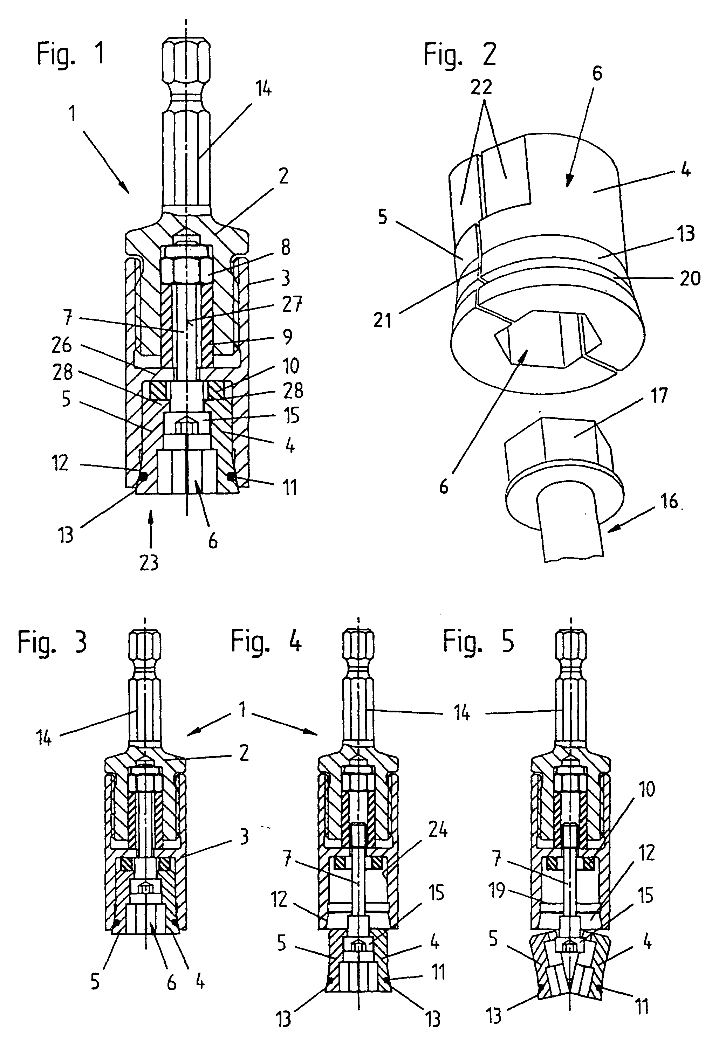

Beim Schraubvorsatz 1 gemäß den Fig. 1 bis 5 ist eine Nuß 6 ersichtlich, welche zur Aufnahme eines Befestigerkopfes 17 und zur Halterung desselben während eines Bohr- und/oder Gewindeformvorganges und/oder während eines Eindrehvorganges eines Befestigers 16 dient. Die Nuß 6 ist beim gezeigten Beispiel aus zwei in Umfangsrichtung aufeinander folgenden Backen 4 und 5 gebildet, welche hier jeweils über einen Abschnitt von annähernd 180° geführt sind. Es ist aber auch durchaus möglich, mehr als zwei solcher Backen vorzusehen, wobei dann beispielsweise beim Einsatz eines Sechskantkopfes beim Befestiger drei oder sechs Backen vorgesehen werden könnten, welche jeweils zwei aneinander anschließende Angriffsbereiche oder jeden Angriffsbereich des Befestigerkopfes für sich erfassen würden. Die Nuß 6 ist verdrehfest in einer hülsenartigen Halterung 3 eingesetzt, wobei die verdrehfeste Halterung aus den Zeichnungen nicht unmittelbar zu entnehmen ist. Lediglich bei der Darstellung nach Fig. 2 ist ersichtlich, daßabgeflachte Abschnitte 22 vorgesehen sind, welche an entsprechenden Nocken oder in das Innere hineinragenden Flächenbereichen der Halterung 3 zur Anlage kommen. Die Darstellungen in den Zeichnungen sind nicht unbedingt dazu geeignet, zu erkennen, daß zwischen der Halterung 3 und der Außenwandung der Backen 4 und 5 durchaus entsprechendes Spiel vorhanden ist, weil die Backen 4 und 5 in der vorderen Ruhestellung der Nuß in radialer Richtung auseinander bewegt werden können. Die Backen sind demnach in ihrer einen Endstellung, bei welcher sie den maximalen Bereich aus der Halterung 3 heraus kommen, in radialer Richtung auseinander drückbar, so daß der Befestigerkopf eingesetzt werden kann.

Bei axialer Krafteinwirkung in Pfeilrichtung 23, d.h. wenn die Spitze eines Bohrteiles eines Befestigers 16 auf dem anzubohrenden Werkstück auftrifft, werden die Backen 4 und 5 in axialer Richtung in die Halterung 3 hineinbewegt, wobei die Backen 4, 5 durch entsprechende formschlüssige Maßnahmen in radialer Richtung gegeneinander gedrückt werden. Durch diese axiale Bewegung und die Krafteinwirkung in radialer Richtung wird der eingesetzte Befestigerkopf 17 wie etwa in einem Schraubstock eingespannt. Die formschlüssigen Maßnamen, um dieses zwangsweise Gegeneinanderdrücken zu bewirken, werden erreicht, wenn zumindest an der Außenoberfläche der Backen 4, 5 zur Mittelachse spitzwinklig verlaufende Auflaufflächen 13 ausgebildet sind, so daßsich die Backen durch axiales Eindrücken in die Halterung 3 gegeneinander hin bewegen. Vorteilhaft ist es jedoch, wenn sowohl an der Halterung 3 als auch an den Backen 4 und 5 spitzwinklig verlaufende Auflaufflächen 12 bzw. 13 vorhanden sind.

Die Backen sind in radialer Richtung federbelastet zusammengedrückt, wobei sich diese Maßnahme nur in der Ruhestellung der Backen, also in der in Richtung aus der Halterung 3 heraus weisenden Endstellung auswirkt. Durch die federbelastete Ausbildung kann der Befestigerkopf 17 in einfacher Weise in die Nuß 6 hineingedrückt werden, da sich die beiden Backen 4 und 5 geringfügig auseinander bewegen können. Eine vorteilhafte Konstruktion wird eine Nut 20 und einen in diese Nut 20 eingelegten O-Ring 11 vorsehen, so daß eine solche federbelastete Ausgestaltung auch in einfacher Weise erzielt wird. Die Nut 20 zur Aufnahme des O-Ringes 11 ist im Bereich der spitzwinkligen Auflaufflächen 13 vorgesehen, so daß der O-Ring 11 in der montierten Stellung der Nuß 6 unverlierbar und nach außen hin abgedeckt gehalten ist.

Die Backen 4, 5 sind sektorförmig ausgebildet ― beim gezeigten Beispiel also jeweils über etwa 180 ° geführt ― und bilden somit miteinander insgesamt einen zylinderartigen Bauteil. Aus Fertigungsgründen und auch für eine sichere Wirkungsweise im Bereich der schrägen Auflaufflächen ist es sinnvoll, wenn am Übergang zwischen der spitzwinkligen Auflauffläche 12 an der Halterung 3 und dem Aufnahmebereich 24 für die drehfeste Mitnahme der Backen eine umlaufende Nut 19 ausgebildet ist.

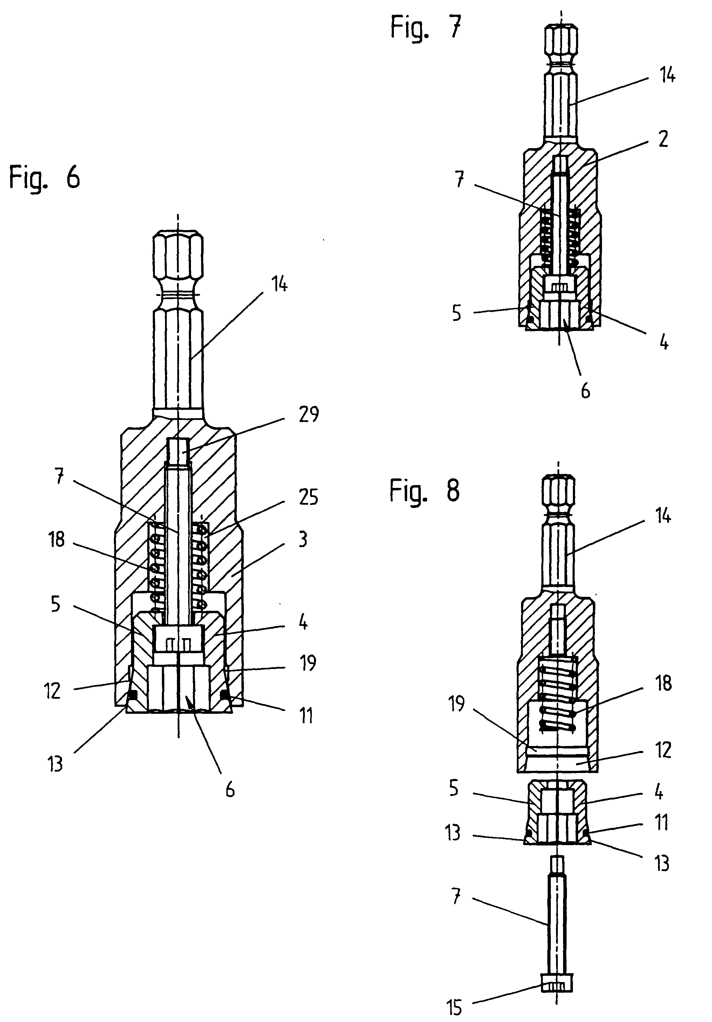

Damit die Nuß nach jedem Setzvorgang für einen Befestiger wieder sicher in die vordere Endstellung gelangt, wo die Backen 4, 5 also wieder geringfügig federnd auseinander geschwenkt werden können, ist im Inneren der Halterung 3 eine entsprechende Feder 10 vorgesehen, welche beim Beispiel nach den Fig. 1 bis 5 als eine Art Federring ausgeführt ist. Es wäre aber auch denkbar, anstelle des Federringes 10 Tellerfedern oder ein entsprechendes Tellerfederpaket einzusetzen. Bei der Ausgestaltung nach den Fig. 6 bis 7 ist in konstruktiv einfacher Weise eine Schraubenfeder 18 vorgesehen, welche zur Erzielung eines entsprechenden Federweges noch entsprechend weit in eine Bohrung 25 der Halterung 3 hineinragt. Natürlich können auch bei diesen Ausführungen entsprechend Tellerfederpakete vorgesehen werden. Wesentlich ist nur, daß die die Nuß bildenden Backen 4, 5 in axialer Richtung aus der Halterung heraus federbelastet sind, um die Nuß 6 immer wieder in die Ausgangslage zurückzuversetzen.

Bei einem Schraubvorsatz gemäß den Fig. 1 bis 5 ist ein entsprechend ausgebildeter Bolzen 14 vorgesehen, welcher in den Antriebsteil eines Eindrehwerkzeuges eingeführt bzw. in diesem eingespannt werden kann. Beim vorliegenden Beispiel ist die Halterung 3 auf einen Kopf 2 aufgeschraubt, d.h. die Halterung 3 ist eine nach zwei Seiten hin offene Hülse mit einem entsprechenden Zwischensteg 26. Die Backen 4, 5 besitzen in Richtung zur Mittelachse 27 weisende Stege 28 auf, welche als Anschlag für den Kopf 15 einer Befestigungsschraube 7 dienen. Mittels der Befestigungsschraube 7 wird die Nuß 6 in ihrer Einsatzstellung in der Haltung 3 gehalten, wobei bei dieser Ausführung auch noch eine Distanzhülse 9 und eine Mutter 8 eingesetzt sind, um die Verbindung entsprechend exakt zu setzen. Der Schraubenkopf 15 bildet somit die Begrenzung für die axiale Verschiebbarkeit der Backen 4, 5 in der Halterung 3.

Bei der Ausgestaltung nach den Fig. 6 bis 8 ist die Befestigungsschraube 7 lediglich in eine entsprechende Gewindebohrung 29 eingedreht, wobei hier entsprechende Anschläge vorgesehen werden können, um ein zu weites Eindrehen der Befestigungsschraube 7 zu verhindern. Eine entsprechende axiale Verschiebbarkeit der Nuß 6 muß ja gewährleistet bleiben. Bei dieser Ausführung wird die Befestigungsschraube 7 bei einer entsprechenden Montage oder Demontage zur Gänze herausgedreht, so daß die einzelnen Backen 4, 5 der Nuß 6 entfernt werden können. Keine gänzliche Demontage ist hingegen bei der Ausgestaltung nach den Fig. 1 bis 5 erforderlich, weil die federnd zusammengehaltenen Backen 4, 5 nach entsprechend weitem Herausdrehen der Befestigungsschraube 7 ausgeschwenkt werden können, was Fig. 5 entnommen werden kann.

Es sind zwar verschiedene konstruktive Varianten möglich, es ist jedoch immer erforderlich, daßdie Nuß 6 aus zwei oder mehreren Backen gebildet wird, welche bei entsprechendem axialen Druck gegeneinander gepreßt werden, um dadurch den Befestigerkopf einzuspannen. In der Zeichnung ist die Nuß 6 im Einsatz mit einem Schraubenkopf dargestellt. Je nach Gestaltung der Nuß6 ist es auch möglich, einen Einsatz für andere Befestiger vorzusehen. So wäre es denkbar, eine solche Nuß bei einem Setzgerät für selbstbohrende Blindnieten, aber auch bei selbstbohrenden Dübeln einzusetzen.

## Patentansprüche

1. Nuß (6) zur Aufnahme eines Kopfes (17) eines zu setzenden Befestigers (16) und zur Halterung des Befestigers sowie zum Antrieb des Befestigers während eines Setzvorganges, wobei die Nuß (6) mehrere in Umfangsrichtung aufeinander folgende Backen (4, 5) aufweist, welche verdrehfest in eine hülsenartige Halterung (3) eingreifen können und gegenüber dieser Halterung (3) in axialer Richtung zwischen zwei Endstellungen verschiebbar sind, wobei an der Innenseite der Halterung (3) zur Mittelachse (27) spitzwinklig verlaufende Auflaufflächen (12) ausgebildet sein können und wobei an der Aussenoberfläche der Backen (4, 5) zur Mittelachse spitzwinklig verlaufende Auflaufflächen (13) ausgebildet sind, wobei die Backen (4, 5) durch axiales Eindrücken in die Halterung (3) infolge der Auflaufflächen (12 bzw. 13) gegeneinander drückbar sind, **dadurch gekennzeichnet, daß** die Backen (4, 5) in radialer Richtung federbelastet zusammengedrückt sind und in ihrer einen Endstellung zur Aufnahme eines Kopfes (17) durch den Kopf auseinanderdrückbar sind und die in axialer Richtung aus der Halterung (3) heraus federbelastbaren Backen (4, 5) bei axialer Krafteinwirkung auf die Backen (4, 5) in Richtung der anderen Endstellung durch gegenseitige Einwirkung zwischen Halterung (3) und Backen (4, 5) in radialer Richtung entgegen der Kraft einer im Inneren der Halterung vorgesehenen Feder zwangsweise zusammendrückbar sind, und daß die Backen (4, 5) durch einen in eine im Bereich der spitzwinkligen Auflauffläche (13) ausgebildete Nut (20) am Außenumfang der Backen eingelegten O-Ring (11) federnd gegeneinander gedrückt sind.

## Claims

1. A socket (6) for receiving a head (17) of a fastener (16) to be set and for retaining the fastener and for driving the fastener during a setting operation, wherein the socket (6) has a plurality of jaws (4,5) succeeding one another in circumferential direction and which can engage in a torsionally resistant manner in a sleeve-like holder (3) and which are displaceable relative to this holder (3) in an axial direction between two end positions, wherein contact surfaces (12) extending at an acute angle to the centre axis (27) can be formed on the inside of the holder (3) and wherein contact surfaces (13) extending at an acute angle to the centre axis are formed on the outer surface of the jaws (4,5), wherein the jaws (4,5) can be pressed towards one another by axial pressing-in into the holder (3) by way of the contact surfaces (12 and 13 respectively), **characterised in that** the jaws (4,5) are pressed together spring-loaded in a radial direction and in one end position to receive a head (17) they can be forced apart by the head and the jaws (4,5), which can be spring-loaded in an axial direction out of the holder (3), can be constrained to be pressed together when an axial force acts on the jaws (4,5) in the direction of the other end position, by mutual action between the holder (3) and jaws (4,5) in a radial direction, counter to the force of a spring provided inside the holder, and **in that** the jaws (4,5) are pressed resiliently against one another by an O-ring (11) inserted into a groove (20) formed on the outer circumference of the jaws in the vicinity of the acute-angled contact surface (13).

## Revendications

1. Douille de clé (6) pour loger la tête (17) d'un élément de fixation (16) à insérer et pour maintenir l'élément de fixation ainsi que pour entraîner cet élément de fixation au cours d'un processus d'insertion, la douille de clé (6) présentant plusieurs mâchoires (4, 5) superposées dans la direction de la périphérie, ces mâchoires pouvant pénétrer sans tourner dans un dispositif de maintien (3) identique à une douille et pouvant coulisser par rapport à ce dispositif de maintien (3) dans une direction axiale entre deux positions finales, des surfaces inclinées (12) formant un angle obtus avec l'axe central (27) pouvant alors être configurées sur la face intérieure du dispositif de maintien (3) et des surfaces inclinées (13) formant un angle obtus avec l'axe central étant alors configurées sur la surface supérieure externe des mâchoires (4, 5), les mâchoires (4, 5) pouvant alors être appuyées l'une contre l'autre grâce à une insertion axiale dans le dispositif de maintien (3) par les surfaces inclinées (12, respectivement 13),
**caractérisée en ce que**
les mâchoires (4, 5) sont appuyées ensemble sous l'action d'un ressort dans une direction radiale et peuvent être appuyées l'une contre l'autre à l'aide de la tête dans leur position finale afin de loger une tête (17), les mâchoires (4, 5) chargées élastiquement pour sortir du dispositif de maintien (3) dans la direction axiale lorsqu'une force axiale sur les mâchoires (4, 5) agit dans la direction de l'autre position finale, sont comprimées de force ensemble par une action entre le dispositif de maintien (3) et les mâchoires (4, 5) dans la direction radiale opposée à la force d'un ressort placé dans la partie interne du dispositif de maintien, et les mâchoires (4, 5) sont pressées élastiquement l'une contre l'autre grâce à un joint torique (11) placé sur la périphérie externe des mâchoires dans une rainure (20) configurée dans la zone des surfaces inclinées (13) formant un angle obtus.
